(19) Europäisches Patentamt
European Patent Office
Office européen des brevets

(11) EP 0 804 079 B1

(12) EUROPÄISCHE PATENTSCHRIFT

(45) Veröffentlichungstag und Bekanntmachung des Hinweises auf die Patenterteilung:
**11.10.2000 Patentblatt 2000/41**

(21) Anmeldenummer: **96939827.0**

(22) Anmeldetag: **15.11.1996**

(51) Int Cl.$^7$: **A01N 47/30**
// (A01N47/30, 43:70)

(86) Internationale Anmeldenummer:
**PCT/EP96/05037**

(87) Internationale Veröffentlichungsnummer:
**WO 97/18710 (29.05.1997 Gazette 1997/23)**

(54) **ALGIZIDKOMBINATION**

ALGICIDE COMBINATION

COMBINAISON ALGICIDE

(84) Benannte Vertragsstaaten:
**AT BE CH DE DK ES FI FR GB GR IE IT LI LU MC NL PT SE**

(30) Priorität: **18.11.1995 DE 19543097**

(43) Veröffentlichungstag der Anmeldung:
**05.11.1997 Patentblatt 1997/45**

(73) Patentinhaber: **ETC C.V.
Hamilton (BM)**

(72) Erfinder:
- **LINDNER, Wolfgang
D-30926 Seelze (DE)**
- **ROTHERMEL, Jörg
D-30926 Seelze (DE)**
- **WÖHNER, Gerhard
D-30827 Garbsen (DE)**
- **TASCHENBRECKER, Erich
D-31515 Wunstorf (DE)**

(74) Vertreter: **Bardehle, Heinz, Dipl.-Ing. et al
Patent- und Rechtsanwälte
Bardehle . Pagenberg . Dost . Altenburg .
Geissler . Isenbruck
Galileiplatz 1
81679 München (DE)**

(56) Entgegenhaltungen:
**EP-A- 0 073 727** **DE-A- 2 653 652**
**DE-A- 4 002 741** **GB-A- 2 074 448**

- **"The Pesticide Manual" 1994 , BRISTISH CROP PROTECTION COUNCIL, XP002027664 10.Auflage siehe Seite 962 - Seite 963**
- **CHEMICAL PATENTS INDEX, DOCUMENTATION ABSTRACTS JOURNAL Section Ch, Week 9216 Derwent Publications Ltd., London, GB; Class C02, AN 92-128989 XP002027665 & JP 04 074 104 A (SK KAKEN KK) , 9.März 1992**

EP 0 804 079 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft eine Algizidkombination aus Mctt und N,N-Dialkylharnstoffderivaten für die Konservierung von technischen Materialien. Der Witterung und dem Licht ausgesetzte technische Materialien werden häufig schnell von Bakterien, Schimmelpilzen, Hefen, Algen und Flechten besiedelt und durch deren Stoffwechselaktivitäten geschädigt. Besonders Beschichtungsmaterialien mit organischen Filmbildnern auf mineralischen Untergründen, Textilausrüstungen und Holzanstriche, aber auch Kunststoffmaterialien können relativ rasch durch Algen bewachsen werden. Dadurch werden diese Flächen teilweise in wenigen Monaten unansehnlich grün bis schwarz verfärbt. Algen bereiten zudem das Wachstum von Pilzen, Flechten und Moosen vor, die durch ihr Wachstum die Beschichtung chemisch oder mechanisch zerstören können.

Besonders die zur Energieeinsparung heute an Fassaden angebrachten Vollwärmeschutzsysteme mit Kunstharzputzen neigen aufgrund der physikalischen Eigenschaften sehr stark zum Algenbefall. Man setzt daher diesen Beschichtungsmaterialien zur Werterhaltung mikrobiozid wirkende Substanzen zu. Technische Materialien, die einen großen Teil ihrer Funktionszeit in Kontakt mit Wasser stehen, werden ebenfalls leicht durch Algen bewachsen. Beispiele sind Fischnetze und Kunststoffmaterialien im Schwimmbadbereich. Bei Fischnetzen kann der Algenbewuchs zu erheblichen Funktionsstörungen führen. Es werden daher Beschichtungen mit Algiziden aufgebracht. Üblicherweise werden dazu nach dem Stand der Technik die ökologisch nicht unbedenklichen Tributylzinnverbindungen verwendet.

Die für den Einsatz im Pflanzenschutz vorgesehenen Herbizide eignen sich üblicherweise nicht für die Ausrüstung von technischen Materialien, da sie nicht gegen Einzeller wirken oder nicht das für den Materialschutz erforderliche Wirkungsspektrum gegen Algen und Cyanobakterien haben. Desweiteren sind sie zum Teil nicht hydrolysestabil, wie zum Beispiel Sulfonylharnstoffderivate oder führen zu Verfärbungen der technischen Systeme, wie z. B. Dinitrophenolderivate, oder werden zu leicht aus den technischen Materialien bei Bewitterung ausgetragen, wie z. B. Linuron oder Chlorsulfuron.

Es erfüllen daher nur sehr wenige Pflanzenschutzwirkstoffe die Anforderungen zum Einsatz als Algizid zur Ausrüstung von technischen Materialien. Ein Beispiel ist das Herbizid Diuron, das in Fassadenfarben und Putzen eingesetzt wird.
Auch Triazinderivate wie z.B. 2-Methylthio-4-cyclopropylamino-6-tertiärbutylamino-1,3,5-triazin (Mctt) sind als Algizide im Einsatz.

Die JP-A-04 074 104 beschreibt ein algizides Mittel, das eine Kombination eines N,N-Dialkylharnstoffderivates und einer Triazinverbindung umfaßt. Die dort beschriebenen Triazinverbindungen unterscheiden sich von Mctt durch ein Halogenatom anstelle der S-Methylgruppe.
Außerdem gibt es fungizid wirkende Substanzen, die als Nebeneffekt eine algistatische Wirkung aufweisen. In diese Kategorie sind zum Beispiel 3-Iodpropinylbutylcarbamat, 2-n-Octylisothiazolin-3-on und Zink-Pyrion einzureihen. In modernen Fassadenbeschichtungen hat man bereits Kombinationsprodukte, bestehend aus Fungiziden und den oben genannten einzelnen Algiziden eingesetzt (Beispielsweise DE-A 42 42 389). Es hat sich in der Praxis aber herausgestellt, daß die derzeit eingesetzten Wirkstoffe ein nicht ausreichend breites Wirkungsspektrum gegen photoautotrophe Mikroorganismen besitzen und oftmals nicht die erwünschte langandauernde Wirksamkeit bei niedriger Einsatzkonzentration erreicht wird.

So wurden beispielsweise auf einer mit 0,1% Diuron ausgerüsteten Vollwärmeschutzfassade bereits nach 2 Jahren deutliche Verfärbungen durch massiven Algenbewuchs beobachtet.

Aufgabe vorliegender Erfindung ist es, Algizide bereitzustellen, die langandauernde hohe Aktivität mit breitem Wirkungsspektrum gegen Algen, Cyanobakterien und anderen photoautotrophen Mikroorganismen aufweisen, in technischen Systemen eingesetzt werden können, ohne deren physikalisch-chemischen Eigenschaften nachteilig zu beeinflussen, eine niedrige Toxizität besitzen und vorteilhaft im Sinne des Umweltschutzes sind. Es hat sich nun überraschenderweise gezeigt, daß bestimmte Kombinationen von Mctt und N,N-Dialkylharnstoffderivate eine synergistisch verstärkte Wirksamkeit aufweisen, das heißt eine höhere Wirksamkeit aufweisen, als der Fachmann aus der Addition der Wirksamkeiten der Einzelkomponenten erwarten würde. Beispielsweise wurde gefunden, daß die Kombinationen auch gegen Algen wirksam sind, die von jeweils mit den Einzelkomponenten ausgerüsteten Fassadenbeschichtungen isoliert wurden. Mit anderen Worten, Beschichtungen, die mit einer solchen Wirkstoffmischung versehen sind, werden in Regionen nicht bewachsen, in denen die Ausrüstung mit den Einzelalgiziden unwirksam ist.

Die vorliegende Erfindung betrifft demnach Algizidkombinationen, dadurch gekennzeichnet, daß sie Mctt und mindestens ein N,N-Dialkylharnstoff-Derivat der allgemeinen Formel II

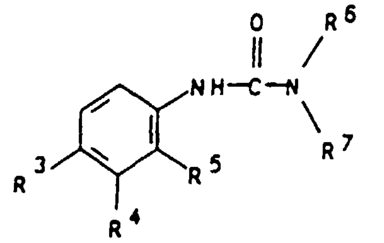

(II)

worin

$R^3$ und $R^4$ unabhängig voneinander Wasserstoff, Chlor, Brom, Alkyl, Alkoxy, Trifluormethyl, Aryloxy oder substituiertes Aryloxy,
$R^5$ Wasserstoff, Chlor, Brom, Fluor oder Alkyl und
$R^6$ und $R^7$ unabhängig voneinander Alkyl oder Alkoxy bedeuten,

enthalten, wobei das Verhältnis von Mctt zu dem mindestens einen N,N-Dialkylharnstoffderivat der allgemeinen Formel II 10:1 bis 1:10 beträgt. In der allgemeinen Formel II können Alkylgruppen verzweigt oder geradkettig sein und beispielsweise Methyl, Ethyl, n-Propyl, i-Propyl, n-Butyl, i-Butyl, sek. Butyl, tert. Butyl oder Pentyl bedeuten. Bevorzugt sind ($C_1$-$C_{10}$)-Alkylgruppen, besonders bevorzugt ($C_1$-$C_4$)-Alkylgruppen. Analoges gilt für Alkoxygruppen.

Aryloxy ist bevorzugt Phenoxy. Substituiertes Aryloxy ist bevorzugt durch Alkoxy, insbesondere durch Methoxy substituiertes Phenoxy.

$R^3$ und $R^4$ stehen bevorzugt unabhängig voneinander für Wasserstoff, Chlor, Brom, Methyl, i-Propyl, Methoxy, Trifluormethyl, Phenoxy oder p-Methoxyphenoxy. $R^5$ steht bevorzugt für Wasserstoff.

$R^6$ und $R^7$ stehen bevorzugt unabhängig voneinander für Methyl, Methoxy oder Butyl.

Beispiele für besonders bevorzugte Verbindungen der allgemeinen Formel II sind Chlorbromuron, Chlortoluron, Diuron, Difenoxuron, Fluometuron, Isoproturon und Neburon. Bevorzugt enthält die Kombination außer Mctt und den Verbindung(en) der allgemeinen Formel II keine weiteren algiziden Verbindungen. Besonders bevorzugt sind erfindungsgemäße Algizidkombinationen, die 2-Methylthio-4-cyclopropylamino-6-tertiärbutylamino-1,3, 5-triazin und Difenoxuron oder Diuron enthalten. In den erfindungsgemäßen Algizidkombinationen ist das Verhältnis der Verbindungen der allgemeinen Formeln I und II bevorzugt zwischen 10:1 und 1:10, besonders bevorzugt zwischen 4:1 und 1:4.

Die erfindungsgemäßen Algizidkombinationen liegen insbesondere in Form algizid wirkender Zubereitungen, Formulierungen oder anderer technischer Systeme, wie sie weiter unten konkretisiert sind, vor. Diese enthalten die Algizidkombinationen im allgemeinen in Konzentrationen von 1 bis 99 Gew%, vorzugsweise 5 bis 50 Gew%. Zur Herstellung solcher Formulierungen können Mctt und die Verbindungen der allgemeinen Formel II beispielsweise in an sich bekannter Weise in Lösung gebracht werden.

Die Wirkstoffe können in an sich bekannter Weise als Lösung formuliert werden. Die Wahl des Lösemittels ist nicht kritisch, besonders gut für unpolare Systeme eignen sich Aromatenbenzine, Xylol, Trimethylbenzol; Ketone wie z. B. Aceton, Cyclohexanon, Isophoron, Methylisobutylketon; Ether und Glykolether, wie z. B. Diisopropylether, Dimethoxyethan, Diethylenglykoldimethylether, Triethylenglykoldimethylether, Ester sowie Essigsäureethylester, Essigsäurebutylester, Glykole, deren Mono- und Diether oder deren Mono- oder Diester, Amide, wie z. B. Dimethylformamid, N-Methylpyrrolidon und N-Octylpyrrolidon. Die genannten Lösemittel können auch als Mischungen eingesetzt werden.

In lösemittelfreien, wässrigen Systemen werden bevorzugt wasserbasierende Pasten der Algizide eingesetzt. Die Herstellung solcher Pasten ist an sich bekannt.

Mctt und die Verbindungen der allgemeinen Formel II selbst sind bekannt und können nach literaturbekannten Methoden hergestellt oder im Handel erworben werden.

Die erfindungsgemäßen Algizidkombinationen zeichnen sich durch hohe Wirksamkeit und ihr breites Wirkungsspektrum gegen Algen, Cyanobakterien und andere photoautotrophe Mikroorganismen aus und können zum Schutz technischer Produkte vor Befall und Zerstörung durch solche Mikroorganismen verwendet werden. Beispielsweise seien Grünalgen der Arten Chlamydomonas, Chlorella, Chlorococcum, Microspora, Platymonas, Pleurococcus, Scenedesmus, Stichococcus, Trentepohlia und Ulothrix, Blaualgen (Cyanophyten) wie Anabaena, Anacystis, Chroococcus, Gleocapsa, Mycrocystis, Nostoc, Oscillatoria, Scytonema und Spirulina, und Gelbgrünalgen wie Tribonema genannt.

Aufgrund ihrer hohen Alkalibeständigkeit und niedrigen Wasserlöslichkeit kommt die hohe Wirksamkeit und das breite Wirkungsspektrum besonders vorteilhaft in Materialien wie Fassadenfarben, Kunstharzputzen, Holzbeschichtungen, Holzlasuren, Betonbeschichtungen, Dachsteinbeschichtungen, Silicatfarben, Dichtungsmassen, Textilausrüstungen und anderen technischen Systemen über ausgedehnte Zeiträume zum Tragen. In diesen Einsatzgebieten werden daher die Vorteile im Vergleich zu den Einzelkomponenten besonders deutlich.

Die erfindungsgemäßen Algizidkombinationen können auch in Form polyvinylchloridhaltiger Kunststoffe eingesetzt werden, da sie temperaturstabil sind und nicht durch die bei der Kalandrierung auftretenden Temperaturbelastungen zerstört werden.

Ebenso vorteilhaft ist der Einsatz in Mitteln zur Beschichtung von Fischnetzen, da die Kombinationsprodukte in gut zu verarbeitenden Formulierungen herstellbar sind und besonders als feinteilige wässrige Dispersion zur Verfügung gestellt werden können.

Die Anwendungskonzentration richtet sich nach der Art des zu schützenden Materials, der Auslaugbelastung und des zu erwartenden Mikrobenbefalls und liegt zwischen 0,005 und 3 Gew%, vorzugsweise zwischen 0,01 und 0,2 Gew% Algizidkombination, bezogen auf das zu schützende Material.

Die erfindungsgemäßen Algizidkombinationen können auch in Kombination mit anderen bekannten antimikrobiell wirkenden Substanzen eingesetzt werden. Beispielsweise seien folgende Fungizide und Bakterizide genannt:

Benzimidazolderivate wie z. B. Carbendazim oder Thiabendazol, quaternäre Ammoniumsalze (Quats), wie z. B. Didecyldimethylammoniumchlorid, Thiocyanatverbindungen wie z. B. 2-Thiocyanatomethylthiobenzothiazol, Carbamate wie z. B. Iodpropinylbutylcarbamat, Isothiazolinon-Derivate, wie z. B. 2-Octyl-isothiazolin-3-on, Triazolfungizide, wie z. B. Tebuconazol, Imidazolfungizide wie z. B. Prochloraz, Halogenierte Sulfide, wie z. B. Dichlofluanid, Tolylfluanid, Captan, Folpet und Nitrile wie z. B. Tetrachlorophthalodinitril

Besonders vorteilhaft sind Formulierungen, die aus einer erfindungsgemäßen Algizidkombination und einem Fungizidgemisch bestehen. Als bevorzugtes Beispiel sei eine Kombination von Carbendazim, 2-Octylisothiazolinon, Terbutryn und Difenoxuron genannt. Diese Wirkstoffkombinationen schützen technische Materialien umfassend und langandauernd gegen Befall mit verfärbenden und zerstörenden Mikroorganismen.

## Beispiel 1

Die Wirksamkeit der erfindungsgemäßen Algizidkombinationen gegen Algen wird mit der Bestimmung der minimalen Hemmkonzentrationen (MHK-Werte) gemessen. (Literatur: K. Grossmann, R. Berghaus, G. Retzlaff; Pesticide Science (1992), 35, 283)

Es wird jeweils eine Stammlösung von 2-Methylthio-4-cyclopropylamino-6-tertiärbutylamino-1,3,5-triazin (Mctt) und Diuron hergestellt. Dazu werden jeweils ca. 1000 mg des Wirkstoffes in 100 ml Ethanol gelöst.

1.0 ml der Lösung wird im Meßkolben auf 100 ml mit Ethanol aufgefüllt. Konzentration der Stammlösungen: ca. 100 mg/l.

Aus diesen Stammlösungen werden in 24-Loch-Mikrotiterplattenzellen (NUNCLON - Fa. NUNC) Verdünnungsreihen in Ethanol sowohl der Einzelwirkstoffe als auch der Kombinationen in den in der Tabelle angegebenen Verhältnissen hergestellt. Das Lösemittel wird im Luftstrom verjagt. In jede der Mikrotiterplattenzellen wird dann 1 ml einer verdünnten Algensuspension einpipettiert. Zusätzlich legt man als Kontrolle wirkstofffreie Algensuspensionen in jeder Mikrotiterplatte an. Als Testorganismen dient ein Algenstamm, der von einem Vollwärmeschutzsystem, dessen Schlußbeschichtung mit einem handelsüblichen Filmkonservierungsmittel auf Basis 2-Methylthio-4-cyclopropylamino-6-tertiärbutylamino-1,3,5-triazin (Mctt) ausgerüstet war, eingesetzt. Die unter sterilen Bedingungen gezüchtete Algenkultur wird mit einer sterilen Bold-Nährlösung so verdünnt, daß eine sehr schwache Grünfärbung bestehen bleibt. Die Mikrotiterplatten werden dann 7 Tage unter Dauerbelichtung mit einer Tageslichtlampe bei 21°C bebrütet. Nach 7 Tagen sind die wirkstofffreien Kontrollzellen gut bewachsen. Man vergleicht das Algenwachstum in jeder Zelle mit den Kontrollzellen und beurteilt nach folgendem Schema:

- kein Algenwachstum

\+ grün wie die Kontrollösungen

(+) heller grün als die Kontrollösungen, Algenwachstum aber feststellbar

Die synergistische Wirksamkeitssteigerung berechnet sich nach dem Verfahren von Kull (Applied Microbiology Vol. 9, S. 538-41 (1961) zu:

$$\text{Synergismus} = \frac{QA}{Qa} + \frac{QB}{Qb}$$

QA = MHK-Wert von Mctt als Konzentration in der Kombination
Qa = MHK-Wert von Mctt als Einzelkomponente

QB = MHK-Wert von Diuron als Konzentration in der Kombination
Qb = MHK-Wert von Diuron als Einzelkomponente

Als synergistische Wirkungsverstärkung gilt ein Wert < 1 in der obigen Formel.

Tabelle:

| Nr. | MHK-Wert Summe der Wirkst. mg/l | MHK-Wert Mctt mg/l | MHK-Wert Diuron mg/l | **Synergism. nach Kull** | Massenverhältn. Mctt/Diuron |
|---|---|---|---|---|---|
| 1 | 0,039 | 0,031 | 0,008 | 0,49 | 3,9 |
| 2 | 0,039 | 0,023 | 0,016 | 0,54 | 1,4 |
| 3 | 0,039 | 0,016 | 0,023 | 0,58 | 0,7 |
| 4 | 0,039 | 0,008 | 0,031 | 0,62 | 0,25 - |
| 5 | 0,088 | 0,088 | - | | **Vergl.r.Wirkst.** |
| 6 | 0,058 | - | 0,058 | | **Vergl.r.Wirkst.** |

Vergleichbeispiel 1

Ausführung wie Beispiel 1, statt Mctt wurde Terbutryn eingesetzt

Tabelle

| Nr. | MHK-Wert Summe der Wirkst. mg/l | MHK-Wert Terbut. mg/l | MHK-Wert Diuron mg/l | **Synergism. nach Kull** | Massenverhältn. Terbut/Diuron |
|---|---|---|---|---|---|
| 1 | 0,058 | 0,046 | 0,012 | 0,73 | 3,8 |
| 2 | 0,058 | 0,035 | 0,025 | 0,83 | 1,4 |
| 3 | 0,039 | 0,016 | 0,023 | 0,58 | 0,7 |
| 4 | 0,039 | 0,008 | 0,031 | 0,63 | 0,25 |
| 5 | 0,088 | 0,088 | - | | **Vergl.r.Wirkst.** |
| 6 | 0,058 | - | 0,058 | | **Vergl.r.Wirkst.** |

**Beispiel 2**

Prüfung der algistatischen Filmkonservierung

In eine mikrobiozidfreie, handelsübliche Fassadenfüllfarbe auf Basis einer Styrolacrylatdispersion wurden 0,025 % fein pulverisiertes Difenoxuron und 0,025 % fein vermahlenes Mctt eingearbeitet. Zum Vergleich wurden gemäß dem Stand der Technik jeweils gleichartige Farbproben mit jeweils 0,025% und 0,05% Difenoxuron bzw. Mctt ausgerüstet. (in nachfolgender Tabelle als Difenox abgekürzt)
Die so erhaltenen Farbproben wurden jeweils zu 300 g/$m^2$ auf Rundfilterpapiere (Nr. 597 von Schleicher & Schüll, Durchmesser 5.5 cm) gestrichen und anschließend 72 Stunden lang bei einer Temperatur von 30°C getrocknet. Zur Simulation einer Auslaugung durch Regenwasser wurden die mit Farbe beschichteten Prüfkörper 96 Stunden mit Leitungswasser gewässert. Das Auslaugwasser wurde jeweils nach 24 Stunden gewechselt.
Die Prüfung der Bewuchsfestigkeit gegen Algen wurde auf festen Bold-Algen-Nährböden durchgeführt. Die trockenen Prüfkörper wurden nach beidseitiger Sterilisierung unter UV-Licht in Petrischalen auf die Nährböden aufgelegt. Jeweils 5 ml einer gut gewachsenen Algenkultur in Bold-Nährlösung wurde auf die zu prüfende Oberfläche unter Sterilbedingungen aufgeimpft, so daß die Farboberfläche schwach grün gefärbt war.
Nach einer Bebrütungszeit von 14 Tagen bei einer Temperatur von 29°C wurde der Grad des Bewuchses mit Algen auf den Farbanstrichen visuell in einer Skala von 0 bis 4 bewertet:

| | | |
|---|---|---|
| 0 | Anstrich nicht bewachsen | |
| 1 | Anstrich gering bewachsen, | unter 10 % der Oberfläche |
| 2 | Anstrich bewachsen, | 10 bis 30 % der Oberfläche |
| 3 | Anstrich bewachsen, | 30 bis 60 % der Oberfläche |

(fortgesetzt)

| | | |
|---|---|---|
| 4 | Anstrich überwachsen, | über 60 % der Oberfläche |

Die Ergebnisse sind in nachstehender Tabelle dargestellt.

Tabelle

| Prüfung der algistatischen Filmkonservierung | | | |
|---|---|---|---|
| **Algizid** | **Konz.** | **Bewuchs mit Chlorella fusca** | |
| Difenox.-Mctt 1:1 | 0,05%(0,025+0,025%) | 0 | |
| Mctt | 0,05% | 0 | Vergleich |
| Mctt | 0,025% | 1 | Vergleich |
| Difenox. | 0,05% | 2 | Vergleich |
| Difenox. | 0,025% | 2 | Vergleich |

## Patentansprüche

1. Algizidkombination, dadurch gekennzeichnet, daß sie 2-Methylthio-4-cyclopropylamino-6-tertiärbutylamino-1, 3, 5-triazin (Mctt) und mindestens ein N,N-Dialkylharnstoff-Derivat der allgemeinen Formel II

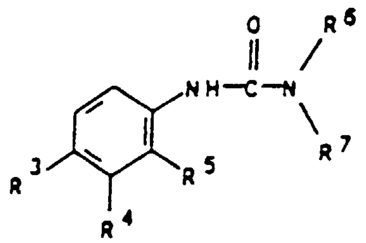

(II)

worin $R^3$ und $R^4$ unabhängig voneinander Wasserstoff, Chlor, Brom, Alkyl, Alkoxy, Trifluormethyl, Aryloxy oder substituiertes Aryloxy, $R^5$ Wasserstoff, Chlor, Brom, Fluor oder Alkyl und $R^6$ und $R^7$ unabhängig voneinander Alkyl oder Alkoxy bedeuten, enthält, wobei das Verhältnis von Mctt zu dem mindestens einen N,N-Dialkylhamstoff-Derivat der allgemeinen Formel II 10:1 bis 1:10 beträgt.

2. Algizidkombination gemäß Anspruch 1, dadurch gekennzeichnet, daß $R^3$ und $R^4$ unabhängig voneinander für Wasserstoff, Chlor, Brom, Methyl, i-Propyl, Methoxy, Trifluormethyl, Phenoxy oder p-Methoxyphenoxy stehen.

3. Algizidkombination gemäß Anspruch 1 oder 2, dadurch gekennzeichnet, daß $R^5$ für Wasserstoff steht.

4. Algizidkombination gemäß einem oder mehreren dern Ansprüch 1 bis 3, dadurch gekennzeichnet, daß $R^6$ und $R^7$ unabhängig voneinander für Methyl, Methoxy oder Butyl stehen.

5. Algizidkombination gemäß einem oder mehreren der Ansprüche 1 bis 4, dadurch gekennzeichnet, daß sie in Form einer algizid wirkenden Zubereitung oder Formulierung vorliegt.

6. Algizidkombination gemäß einem oder mehreren der Ansprüche 1 bis 5, dadurch gekennzeichnet, daß sie in Form von Fassadenfarben, Kunstharzputzen, Holzbeschichtungen, Holzlasuren, Betonbeschichtungen, Dachsteinbeschichtungen, Silicatfarben, Dichtungsmassen, Textilausrüstungen oder polyvinylchloridhaltigen Kunststoffen vorliegt.

7. Algizidkombination gemäß einem oder mehreren der Ansprüche 1 bis 6, dadurch gekennzeichnet, daß sie 2-Methylthio-4-cyclopropylamino-6-tertiärbutylamino-1,3,5-triazin und Difenoxuron oder Diuron enthält.

8. Verwendung einer Algizidkombination gemäß einem oder mehreren der Ansprüche 1 bis 7 zum Schutz technischer

Produkte vor Befall und Zerstörung durch Algen, Cyanobakterien und andere photoautotrophe Mikroorganismen.

## Claims

**1.** An algicide combination, characterized in that it contains 2-methylthio-4-cyclopropylamino-6-*tert*-butylamino-1,3,5-triazine (Mctt) and at least one N,N-dialkyl urea derivative of the general formula II

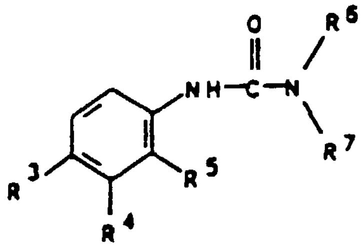

(II)

wherein $R^3$ and $R^4$ are independently of each other hydrogen, chlorine, bromine, alkyl, alkoxy, trifluoromethyl, aryloxy or substituted aryloxy, $R^5$ is hydrogen, chlorine, bromine, fluorine or alkyl and $R^6$ and $R^7$ are independently of each other alkyl or alkoxy, the ratio of Mctt to the at least one N,N-dialkyl urea derivative of the general formula II being 10:1 to 1:10.

**2.** An algicide combination according to claim 1, characterized in that $R^3$ and $R^4$ are independently of each other hydrogen, chlorine, bromine, methyl, i-propyl, methoxy, trifluoromethyl, phenoxy or p-methoxyphenoxy.

**3.** An algicide combination according to claim 1 or 2, characterized in that $R^5$ is hydrogen.

**4.** An algicide combination according to one or more of the claims 1 to 3, characterized in that $R^6$ and $R^7$ are independently of each other methyl, methoxy or butyl.

**5.** An algicide combination according to one or more of the claims 1 to 4, characterized in that it is present in the form of a preparation or formulation having an algicidal effect.

**6.** An algicide combination according to one or more of the claims 1 to 5, characterized in that it is present in the form of facade paints, plasters based on synthetic resins, wood-coatings, wood-glazings, concrete-coatings, roofing tile-coatings, silicate paints, sealing compounds, textile equipment or plastics containing polyvinylchloride.

**7.** An algicide combination according to one or more of the claims 1 to 6, characterized in that it contains 2-methylthio-4-cyclopropylamino-6-*tert*-butylamino-1,3,5-triazine and difenoxuron or diuron.

**8.** Use of an algicide combination according to one or more of the claims 1 to 7 for the purpose of protecting technical products from being infested with or destroyed by algae, cyanobacteria and other photoautotrophic microorganisms.

## Revendications

**1.** Composition algicide, caractérisée en ce qu'elle contient de la 2-méthylthio-4-cyclopropylamino-6-tert-butylamino-1,3,5-triazine (Mctt) et au moins un dérivé de N,N-dialkylurée de formule générale II

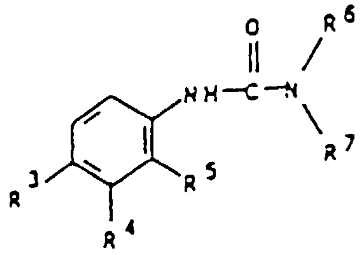

(II)

dans laquelle $R^3$ et $R^4$ représentent chacun indépendamment de l'autre un atome d'hydrogène, un groupe chloro, bromo, alkyle, alcoxy, trifluorométhyle, aryloxy ou aryloxy substitué, $R^5$ est un atome d'hydrogène ou un groupe chloro, bromo, fluoro ou alkyle, et $R^6$ et $R^7$ représentent chacun indépendamment de l'autre un groupe alkyle ou alcoxy, le rapport du Mctt au ou aux dérivés de N,N-dialkylurée de formule générale II étant de 10:1 à 1:10.

2. Combinaison algicide selon la revendication 1, caractérisée en ce que $R^3$ et $R^4$ représentent chacun indépendamment de l'autre un atome d'hydrogène, un groupe chloro, bromo, méthyle, isopropyle, méthoxy, trifluorométhyle, phénoxy ou p-méthoxyphénoxy.

3. Combinaison algicide selon la revendication 1 ou 2, caractérisée en ce que $R^5$ est un atome d'hydrogène.

4. Combinaison algicide selon l'une ou plusieurs des revendications 1 à 3, caractérisée en ce que $R^6$ et $R^7$ représentent chacun indépendamment de l'autre un groupe méthyle, méthoxy ou butyle.

5. Combinaison algicide selon l'une ou plusieurs des revendications 1 à 4, caractérisée en ce qu'elle se présente sous forme d'une préparation ou d'une formulation à effet algicide.

6. Combinaison algicide selon l'une ou plusieurs des revendications 1 à 5, caractérisée en ce qu'elle se présente sous forme de peintures pour façades, d'enduits à base de résine synthétique, de revêtements de bois, de lasures pour bois, de revêtements pour béton, de revêtements pour tuiles, de peintures à base de silicates, de masses d'étanchéité, d'apprêts textiles ou de plastiques contenant du poly(chlorure de vinyle).

7. Combinaison algicide selon l'une ou plusieurs des revendications 1 à 6, caractérisée en ce qu'elle contient de la 2-méthylthio-4-cyclopropylamino-6-tertbutylamino-1,3,5-triazine et du difénoxuron ou du diuron.

8. Utilisation d'une combinaison algicide selon l'une ou plusieurs des revendications 1 à 7, pour protéger des produits techniques contre une infestation et une détérioration par des algues, des cyanobactéries et d'autres microorganismes photo-autotrophes.